# EUROPÄISCHE PATENTSCHRIFT

(11) **EP 0 564 766 B1**
(45) Veröffentlichungstag und Bekanntmachung des Hinweises auf die Patenterteilung: **16.10.1996**
(21) Anmeldenummer: 93101032.6
(22) Anmeldetag: 23.01.1993
(51) Int. Cl.: B23Q 39/04, B23Q 1/00

(54) **Montagemaschine**
Assembling machine
Machine d'assemblage

(30) Priorität: 09.04.1992 DE 4211901
(43) Veröffentlichungstag der Anmeldung: 13.10.1993
(73) Patentinhaber: SIM ZUFÜHR-UND Montagetechnik GmbH & CO.KG, D-37308 Heilbad Heiligenstadt (DE)
(72) Erfinder: Birkhofer, Herbert, Prof. Dr. Ing., W-6100 Darmstadt (DE)
(74) Vertreter: Andrejewski, Walter, Dr.

(56) Entgegenhaltungen:
- DE-A- 3 119 019

## Beschreibung

Die Erfindung betrifft eine taktgesteuerte Montagemaschine für die Montage von jeweils mehreren Bauteilen zu einem Werkstück, insbesondere in Form eines Rundtaktautomaten, - mit einer auf einem Maschinengestell zentral angeordneten Werkstückaufnahmeeinrichtung, die einen um eine vertikale Achse drehbaren Werkstückaufnahmetisch mit mehreren über den Umfang verteilten Werkstückaufnahmen und ein Rast/SchrittGetriebe für eine nach Maßgabe der Werkstückaufnahmen getaktete Drehbewegung des Werkstückaufnahmetisches aufweist, und einer Mehrzahl von auf dem Maschinengestell angeordneten, um den Werkstückaufnahmetisch verteilten, den Werkstückaufnahmen zugeordneten Arbeitsstationen, wobei für die Werkstückaufnahmeeinrichtung über das Rast/Schritt-Getriebe sowie für die Arbeitsstationen eine einzige Antriebsanordnung eingerichtet ist, die in dem Maschinengestell unterhalb der Werkstückaufnahmeeinrichtung angeordnet ist und eine kontinuierlich angetriebene Abgangswelle aufweist, die über einen Zahnriementrieb mit auf der Abgangswelle aufgesetzter Zahnriemenscheibe über eine Zahnriemenscheibe auf das Rast/SchrittGetriebe arbeitet und über nockengesteuerte flexible mechanische Betätigungselemente die Arbeitsstationen betätigt.

In diesen Maschinen durchlaufen die zu montierenden Einzelteile den Montageprozeß auf der Kreisbahn oder einer Geraden in Werkstückträgern, die auf einem Drehteller oder Transportband montiert sind. Die Montagestationen können bei Rundtaktmaschinen radial innerhalb oder außerhalb der Kreisbahn angeordnet sein. Neben der üblichen Tischbauart mit einer Werkstückträgerreihe gibt es auch solche, die mit zwei oder mehreren parallelen Werkstückträgerreihen ausgeführt sind. Dabei wird die Austragleistung der Maschine erhöht.

Eine gattungsgemäße Montagemaschine ist aus der DE 31 19 019 bekannt. Bei der bekannten Ausführung läuft der Zahnriementrieb auch über eine Nockenwelle, die flexible mechanische Betätigungselemente in Form von Kabeln, welche zu den Arbeitsstationen führen, betätigt. Die Kabel werden mit Hilfe von an ihren beiden Enden angreifenden Federn gespannt und können nur Zugkräfte übertragen.

Es ist aus der Patentschrift DE 30 46 172 eine Rundtaktmaschine bekannt, deren Arbeitsstationen von einer zentralen Steuerwelle angetrieben werden. Die Stationen können eine Hubbewegung sowie eine Bewegung in radialer Richtung ausführen. Die Radialbewegungen werden durch eine Kurvenscheibe, die auf der winkelbewegbaren Zentralwelle sitzt, erzeugt. Die Hubbewegungen der Arbeitsstationen sind mit der Zentralwelle gekoppelt. Eine horizontal angeordnete Antriebs- und Steuerwelle erzeugt über eine Kurvenscheibe die Hubbewegung der Zentralwelle. Eine zweite Kurvenscheibe auf der Antriebswelle erzielt über eine Schwenkhebel-/Schubstangenanordnung die Winkelverstellung der Zentralwelle.

Weiterhin ist aus der Patentschrift DE 35 07 224 eine Rundtischmaschine mit Arbeitsstationen bekannt, bei denen die Werkzeughalterungen zweiteilig ausgeführt sind, wobei ein Teil vertikal verschiebbar geführt ist. Das zweite Teil ist an diesem in horizontaler Richtung bewegbar befestigt und trägt das Werkzeug. Die Horizontalbewegung erfolgt über eine auf der winkelverstellbaren Zentralwelle befestigten Kurvenscheibe. Durch eine axiale Bewegung der Zentralwelle wird über ein Hubelement eine Vertikalbewegung des Werkzeughalters erzielt. Die Schwenkbewegung der Zentralwelle wird über einen Schwenkhebel und eine Gelenkanordnung von einer Kurvenscheibe gesteuert, die auf einer horizontalen Antriebswelle sitzt. Auf dieser Welle sitzt eine zweite Kurvenscheibe, die die Hubbewegung der Zentralwelle steuert.

Weiterhin ist aus der EP-A-0 100 307 bekannt, daß der Antrieb der Arbeitsstationen von einem zentralen Getriebe über einen Zahnrad-/Zahnriementrieb erfolgt, wobei ein Zahnriemen alle Arbeitsstationen antreibt. Die horizontale Antriebswelle einer Arbeitsstation überträgt die Bewegung über ein Kegelrad auf die horizontale Steuerwelle. Die auf der Steuerwelle befindlichen Nockenscheiben erzeugen über Hebelgestänge und Schubstangen die erforderlichen Arbeitsbewegungen.

Allen diesen Vorrichtungen haftet der Nachteil an, daß die Arbeitsbewegung der einzelnen Arbeitsstationen nur über mehrere Maschinenelemente möglich ist, wodurch eine kompakte und komplizierte Bauweise erforderlich und eine Steigerung der Taktzeiten nur im ganzen möglich ist.

Weiterhin ist von Nachteil, daß die Zugänglichkeit zu den einzelnen Stationen sehr eingeschränkt wird und demzufolge die Übersichtlichkeit der Gesamtanlage für den Bediener fehlt. Durch die komplizierte Bauweise ergeben sich hohe Fertigungskosten und ein relativ hoher Verschleiß der Bauteile.

Der Erfindung liegt die Aufgabe zugrunde, eine Montagemaschine zu schaffen, die sich im Baukastenprinzip herstellen läßt und der Antrieb sowohl des Werkstückaufnahmetisches als auch der einzelnen Arbeitsstationen selbst über eine zentrale Welle erfolgt, für sehr hohe Taktfolgen geeignet ist und eine hohe Wiederholgenauigkeit besitzt.

Diese Aufgabe wird dadurch gelöst, daß die Abgangswelle über darauf aufgesetzte Kurvenscheiben, die den einzelnen Arbeitsstationen zugeordnet sind, sowie daran angeschlossene flexible mechanische Zug/Druck-Betätigungselemente die Arbeitsstationen betätigt. Damit übernimmt die Abgangswelle gleichzeitig Antriebs- und Steuerfunktionen. Den Kurvenscheiben können Rollenhebel zugeordnet sein, die auf die Betätigungselemente arbeiten.

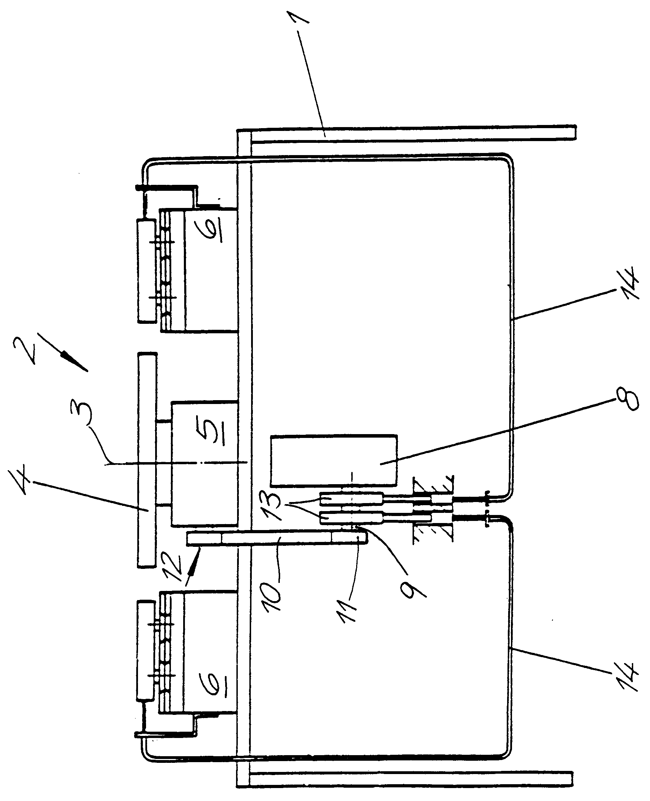

Im folgenden wird ein in der Zeichnung dargestelltes Ausführungsbeispiel der Erfindung erläutert; die einzige Figur zeigt schematisch eine taktgesteuerte Montagemaschine in Form eines Rundtaktautomaten.

Ein Maschinengestell 1 weist eine daran zentral angeordnete Werkstückaufnahmeeinrichtung 2 auf, zu der ein um eine vertikale Achse drehbarer Werkstückaufnahmetisch 4 mit mehreren über den Umfang verteilten Werkstückaufnahmen und ein Rast/Schritt-Getriebe 5 gehört. Auf dem Maschinengestell 1 sind um den Werkstückaufnahmetisch 4 verteilt mehrere Arbeitsstationen 6 angeordnet, die den Werkstückaufnahmen des Werkstückaufnahmetisches 4 zugeordnet sind.

Unterhalb der Werkstückaufnahmeeinrichtung 2 ist eine Antriebsanordnung 8 angeordnet, die eine kontinuierlich angetriebene Abgangswelle 9 aufweist. Die Abgangswelle 9 arbeitet über einen Zahnriementrieb 10 mit auf der Abgangswelle 9 aufgesetzter Zahnriemenscheibe 11 und eine weitere Zahnriemenscheibe 12 auf das Rast/Schritt-Getriebe 5. Außerdem sind auf die Abgangswelle 9 Kurvenscheiben 13 aufgesetzt, die den einzelnen Arbeitsstationen 6 zugeordnet sind. Die Kurvenscheiben 13 betätigen daran angeschlossene flexible mechanische Zug/Druck-Betätigungselemente 14, die zu den zugeordneten Arbeitsstationen 6 führen und diese betätigen.

Den Arbeitsstationen 6 sind entsprechende Bearbeitungsgeräte, Zuführgeräte, Einlegegeräte oder andere notwendige Geräte zugeordnet, die in der Zeichnung nicht näher dargestellt sind. Über das Rast/Schritt-Getriebe 5 werden die zu bearbeitenden Werkstücke, die sich auf dem Werkstückaufnahmetisch 4 befinden, zu den einzelnen Arbeitsstationen 6 transportiert.

Die direkte Betätigung der Arbeitsstationen 6 von der Abgangswelle 9 über die Kurvenscheiben 13 und die daran angeschlossenen flexiblen mechanischen Zug/Druck-Betätigungselemente 14 garantieren einen sehr flexiblen Aufbau der Montagemaschine, insbes. der Anordnung der Arbeitsstationen 6 relativ zu dem Rast/Schritt-Getriebe 5. Diese Anordnung sorgt dafür, daß auch bei kurzen Taktzeiten, also hoher Arbeitsgeschwindigkeit, ein sehr exaktes wiederholendes Betätigen der Arbeitsstationen 6 möglich ist.

Weiterhin ist vorteilhaft, daß die Arbeitsstationen 6 beliebig erweitert werden können, indem eine entsprechende Anzahl von Kurvenscheiben auf der Abgangswelle 9 angeordnet wird. Durch die Anordnung der Zahnriemenscheibe 11 und der Kurvenscheibe 13 auf der Abgangswelle 9 der Antriebsanordnung 8, die damit gleichzeitig Antriebs- und Steuerwelle ist, wird der Bauaufwand wesentlich verringert und werden Synchronisierungsfehler zwischen dem Rast/Schritt-Getriebe 5 und den Arbeitsstationen 6 ausgeschlossen.

## Patentansprüche

1. Taktgesteuerte Montagemaschine für die Montage von jeweils mehreren Bauteilen zu einem Werkstück, insbesondere in Form eines Rundtaktautomaten, - mit
einer auf einem Maschinengestell (1) zentral angeordneten Werkstückaufnahmeeinrichtung (2), die einen um eine vertikale Achse (3) drehbaren Werkstückaufnahmetisch (4) mit mehreren über den Umfang verteilten Werkstückaufnahmen und ein Rast/Schritt-Getriebe (5) für eine nach Maßgabe der Werkstückaufnahmen getaktete Drehbewegung des Werkstückaufnahmetisches (4) aufweist, und
einer Mehrzahl von auf dem Maschinengestell (1) angeordneten, um den Werkstückaufnahmetisch (4) verteilten, den Werkstückaufnahmen zugeordneten Arbeitsstationen (6),
wobei für die Werkstückaufnahmeeinrichtung (2) über das Rast/Schritt-Getriebe (5) sowie für die Arbeitsstationen (6) eine einzige Antriebsanordnung (8) eingerichtet ist, die in dem Maschinengestell (1) unterhalb der Werkstückaufnahmeeinrichtung (2) angeordnet ist und eine kontinuierlich angetriebene Abgangswelle (9) aufweist, die über einen Zahnriementrieb (10) mit auf der Abgangswelle (9) aufgesetzter Zahnriemenscheibe (11) über eine Zahnriemenscheibe (12) auf das Rast/Schritt-Getriebe (5) arbeitet und über nockengesteuerte flexible mechanische Betätigungselemente die Arbeitsstationen (6) betätigt, **dadurch gekennzeichnet**, daß die Abgangswelle (9) über darauf aufgesetzte Kurvenscheiben (13), die den einzelnen Arbeitsstationen (6) zugeordnet sind, sowie daran angeschlossene flexible mechanische Zug/Druck-Betätigungselemente (14) die Arbeitsstationen (6) betätigt.

## Claims

1. A cyclically controlled assembling machine for the assembly of a plurality of components in each case to form a workpiece, particularly in the form of a revolving automatic machine, - having
a workpiece receiver device (2) which is centrally disposed on a machine frame (1) and which comprises a workpiece receiver table (4) rotatable about a vertical axis (3) and having a plurality of workpiece receivers distributed over its periphery, and a dwell/step linkage (5) for a rotary movement of the workpiece receiver table (4) which is timed according to the workpiece receivers, and
having a plurality of workstations (6) which are associated with the workpiece receivers and which are disposed on the machine frame (1) distributed round the workpiece receiver table (4),
wherein a single drive arrangement (8) is provided for the workpiece receiver device (2) via the dwell/step linkage (5) and for the workstations (6), which drive arrangement is disposed underneath the workpiece receiver device (2) in the machine frame (1) and comprises a continuously driven output shaft (9) which acts on the dwell/step linkage (5) via a toothed belt wheel (12), by way of a toothed belt drive (10) having a toothed belt wheel (11) placed on the output shaft (9), and which actuates the workstations (6) via cam-controlled, flexible, mechanical actuating elements, characterised in that the output shaft (9) actuates the workstations (6) via cam discs (13) placed on the output shaft and associated with the individual workstations (6) and via flexible, mechanical compression-tension actuating elements (14) attached to the cam discs.

## Revendications

1. Machine de montage commandée de façon cadencée pour le montage de plusieurs composants respectifs pour former une pièce à usiner, notamment sous la forme d'un automate circulaire d'entraînement cadencé, - comportant
un dispositif (2) de réception de pièces à usiner, qui est disposé d'une manière centrée sur un bâti de machine (1) et comporte une table (4) de réception de pièces à usiner, qui peut tourner autour d'un axe vertical (3) et comporte plusieurs logements pour pièces à usiner, qui sont répartis sur la périphérie, et un mécanisme d'encliquetage / d'avance pas-à-pas (5) pour entraîner en rotation la table (4) de réception des pièces à usiner, d'une manière cadencée en fonction des logements des pièces à usiner, et une multiplicité de postes de travail (6), qui sont disposés sur le bâti de machine (1), sont répartis autour de la table (4) de réception de pièces à usiner et sont associés à ces logements, et dans laquelle
il est prévu un seul dispositif d'entraînement (8) pour le dispositif (2) de réception des pièces à usiner par l'intermédiaire du mécanisme d'encliquetage / d'avance pas-à-pas (5), ainsi que pour les postes de travail (6), ce dispositif étant disposé dans le bâti de machine (1) au-dessous du dispositif (2) de réception des pièces à usiner et comportant un arbre de sortie (9) entraîné continûment, qui agit par l'intermédiaire d'un système d'entraînement à courroie dentée (10), avec une poulie (11) montée sur l'arbre de sortie (9) et par l'intermédiaire d'une poulie (12) sur le mécanisme d'encliquetage / d'entraînement pas-à-pas (5) et actionne les postes de travail (6) par l'intermédiaire d'éléments mécaniques flexibles d'actionnement, commandés par des cames, caractérisée en ce que l'arbre de sortie (9) actionne les postes de travail (6) par l'intermédiaire de disques à cames (13) montés sur cet arbre et qui sont associés aux différents postes de travail (6), ainsi que par l'intermédiaire d'organes mécaniques flexibles d'actionnement travaillant en traction / compression (14), raccordés à ces postes de travail.
